(19) Europäisches Patentamt
European Patent Office
Office européen des brevets

(11) EP 2 085 877 A1

(12) **EUROPEAN PATENT APPLICATION**

(43) Date of publication:
**05.08.2009 Bulletin 2009/32**

(51) Int Cl.:
**G06F 7/72** (2006.01)

(21) Application number: **08305148.2**

(22) Date of filing: **05.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.02.2008 EP 08300067**

(71) Applicant: **THOMSON Licensing**
**92100 Boulogne-Billancourt (FR)**

(72) Inventor: **Joye, Marc**
**35510 Cesson-Sevigne (FR)**

(74) Representative: **Ruellan-Lemonnier, Brigitte**
**Thomson multimedia**
**Patent Department**
**46 Quai A. Le Gallo**
**92648 Boulogne Cedex (FR)**

(54) **A device and a computer program product for calculating additions of points on elliptic curves in Edwards form**

(57)   A device (100) for calculations on elliptic curves. The elliptic curve in generalized Edwards form is projected on a projective form so that a point $P = (x_1, y_1)$ on the elliptic curve is represented by the tuple $(x_1 Z_1 : y_1 Z_1 : Z_1)$ for any $Z_1 \neq 0$. An addition of two projective points $(X_1 : Y_1 : Z_1)$ and $(X_2 : Y_2 : Z_2)$ is given by $X_3 = Z_1 Z_2 (X_1 Y_2 + X_2 Y_1) M$, $Y_3 = Z_1 Z_2 (Y_1 Y_2 - e X_1 X_2) N$, and $Z_3 = MN$, where $M = f Z_1^2 Z_2^2 - d X_1 X_2 Y_1 Y_2$ and $N = f Z_1^2 Z_2^2 + d X_1 X_2 Y_1 Y_2$. By rewriting $X_1 Y_2 + X_2 Y_1$ as $(X_1 + Y_1)(X_2 + Y_2) - X_1 Y_1 - X_2 Y_2$, this costs $10\mathbf{M} + 1\mathbf{S} + 1\mathbf{d} + 1\mathbf{e} + 1\mathbf{f}$ where $\mathbf{M}$ denotes a field multiplication, $\mathbf{S}$ denotes a field squaring, and $\mathbf{d}$, $\mathbf{e}$, $\mathbf{f}$ denote respectively a multiplication by constants $d, e, f$. Also provided is a special doubling formula, a method, and a computer program (140).

Figure 1

**Description**

FIELD OF THE INVENTION

The present invention relates generally to cryptography, and more specifically, with the efficient implementation of elliptic curve cryptosystems.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Elliptic curve cryptography (ECC) is becoming more and more widespread, owing to, among other things, a key length that is significantly shorter than a Rivest-Shamir-Adleman (RSA) key for a corresponding security level. However, shorter key length is not the only factor to consider when choosing a cryptosystem; for example computation time must also be considered, as a relatively long wait may prove irritating to a user.

Harold M. Edwards presented a new model for representing the points on an elliptic curve in "A normal form for elliptic curves", Bulletin of the American Mathematical Society, 44(3):393-422, 2007. The so-called Edwards curves lead to very efficient implementations for point addition and/or point doubling.

Basing their work upon Edwards' model, Daniel J. Bernstein and Tanja Lange found a way to further speed up computations on elliptic curves, presented in "Faster addition and doubling on elliptic curves", Advances in Cryptology - ASIACRYPT 2007, volume 4833 of Lecture Notes in Computer Science, pages 29-50, Springer, 2007.

The skilled person will appreciate, however, that a solution that enables even quicker computations on elliptic curves may be desired. The present invention provides such a solution.

SUMMARY OF THE INVENTION

In a first aspect, the invention is directed to a device adapted to perform calculations on an elliptic curve in generalized Edwards form, $y^2(1 - df\,x^2) = f^2 - e\,x^2$. The device comprises a processor adapted to add two points $(x_1, y_1)$ and $(x_2, x_2)$ by calculating $x_3 = (x_1 y_2 + x_2 y_1)/(f + d\,x_1 x_2 y_1 y_2)$ and $y_3 = (y_1 y_2 - e\,x_1 x_2)/(f - d\,x_1 x_2 y_1 y_2)$ in direct or equivalent coordinates.

In a preferred embodiment, the equivalent coordinates of an affine representation of a point $(x_i, y_i)$ is given by a projective point $(x_i Z_i : y_i Z_i : Z_i)$ for any $Z_i \neq 0$ on a corresponding projective elliptic curve in generalized Edwards form, $E_{/K} : Y^2(Z^2 - df\,X^2) = f^2 Z^4 - e\,X^2 Z^2$, of the elliptic curve in generalized Edwards form, $E_{/K} : y^2(1 - df\,x^2) = f^2 - e\,x^2$, and the two projective points are added by calculating $X_3 = Z_1 Z_2(X_1\,Y_2 + X_2 Y_1)M$, $Y_3 = Z_1 Z_2(Y_1\,Y_2 - e\,X_1 X_2)N$, and $Z_3 = MN$, where $M = f\,Z_1^2 Z_2^2 - d\,X_1 X_2 Y_1 Y_2$ and $N = f\,Z_1^2 Z_2^2 + d\,X_1 X_2 Y_1 Y_2$. It is advantageous that the processor is further adapted to convert the affine representation of points $(x_i, y_i)$ into the projective representation $(x_i Z_i : y_i Z_i : Z)$ for any $Z_i \neq$ 0; and recover the affine representation of a third point from a projective representation $(X_3 : Y_3 : Z_3)$ by calculating $x_3 = X_3/Z_3$ and $y_3 = Y_3/Z_3$.

In a further preferred embodiment, the values of parameters $d$, $e$, and $f$ minimize the total cost of $1\mathbf{d}+1\mathbf{e}+1\mathbf{f}$, where $\mathbf{d, e,}$ and $\mathbf{f}$ denote respectively a multiplication by the parameters $d$, $e$, and $f$. It is advantageous that the values of $d$, $e$, and $f$ are chosen from -2, -1, +1, and +2.

In a second aspect, the invention is directed to a method of performing calculations on an elliptic curve in generalized Edwards form, $E_{/K} : y^2(1 - df\,x^2) = f^2 - e\,x^2$, by adding, in a device, two points $(x_1, y_1)$ and $(x_2, x_2)$ by calculating $x_3 = (x_1 y_2 + x_2 y_1)/(f + d\,x_1 x_2 y_1 y_2)$ and $y_3 = (y_1 y_2 - e\,x_1 x_2)/(f - d\,x_1 x_2 y_1 y_2)$ in direct or equivalent coordinates.

In a third aspect, the invention is directed to a method of performing calculations on a projective elliptic curve in generalized Edwards form, $E_{/K} : Y^2(Z^2 - df\,X^2) = f^2\,Z^4 - e\,X^2 Z^2$, of an affine elliptic curve in generalized Edwards form, $E_{/K} : y^2(1 - df\,x^2) = f^2 - e\,x^2$, where a point $(x_1, y_1)$ on the affine elliptic curve is then represented by the projective tuple $(x_1 Z_1 : y_1 Z_1 : Z_1)$ for any $Z_1 \neq 0$, by adding, in a device, two points $(X_1 : Y_1 : Z_1)$ and $(X_2 : Y_2 : Z_2)$ by calculating $X_3 = Z_1 Z_2(X_1\,Y_2 + X_2 Y_1)M$, $Y_3 = Z_1 Z_2(Y_1 Y_2 - e\,X_1 X_2)N$, and $Z_3 = MN$, where $M = f\,Z_1^2 Z_2^2 - d\,X_1 X_2 Y_1 Y_2$ and $N = f\,Z_1^2 Z_2^2 + d\,X_1 X_2\,Y_1 Y_2$.

In a fourth aspect, the invention is directed to a computer program product (140) comprising instructions adapted to, when executed on a processor, perform calculations on an elliptic curve in generalized Edwards form, $E_{/K} : y^2(1 - df\,x^2) = f^2 - e\,x^2$, by adding two points $(x_1, y_1)$ and $(x_2, x_2)$ by calculating $x_3 = (x_1 y_2 + x_2 y_1)/(f + d\,x_1 x_2 y_1 y_2)$ and $y_3 = (y_1 y_2 - e\,x_1 x_2)/(f - d\,x_1 x_2 y_1 y_2)$ in direct or equivalent coordinates.

In a fifth aspect, the invention is directed to a computer program product (140) comprising instructions adapted to, when executed on a processor, perform calculations on a projective elliptic curve in generalized Edwards form, $E_{/\square}$ : $Y^2(Z^2 - df\,X^2) = f^2\,Z^4 - e\,X^2Z^2$, of an affine elliptic curve in generalized Edwards form, $E_{/\square}$ : $y^2(1 - df\,x^2) = f^2 - e\,x^2$, where a point $(x_1, y_1)$ on the affine elliptic curve is then represented by the projective tuple $(x_1Z_1 : y_1Z_1 : Z_1)$ for any $Z_1 \neq 0$, by adding two points $(X_1 : Y_1 : Z_1)$ and $(X_2 : Y_2 : Z_2)$ by calculating $X_3 = Z_1Z_2(X_1Y_2 + X_2Y_1)M$, $Y_3 = Z_1Z_2(Y_1Y_2 - e\,X_1X_2)N$, and $Z_3 = MN$, where $M = f\,Z_1^2Z_2^2 - d\,X_1X_2Y_1Y_2$ and $N = f\,Z_1^2Z_2^2 + d\,X_1X_2Y_1Y_2$.

BRIEF DESCRIPTION OF THE DRAWINGS

Preferred features of the present invention will now be described, by way of non-limiting example, with reference to the accompanying drawings, in which:

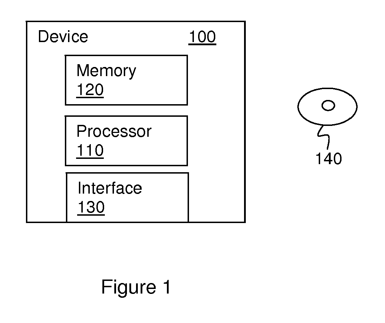

Figure 1 illustrates a device for calculations on an elliptic curve according to a preferred embodiment of the invention.

PREFERRED EMBODIMENT OF THE INVENTION

Figure 1 illustrates a device 100 for calculations on an elliptic curve according to a preferred embodiment of the invention. The device 100 comprises at least one processor 110 (hereinafter "processor") adapted to execute a computer program that performs the calculations of the method described hereinafter. The computer program may be stored on any suitable computer program product 140. It should be noted that the processor 110 may also be implemented in hardware, or a combination of software and hardware. The device 100 further comprises a memory 120 adapted to store data, such as for example intermediate calculation results from the processor 110. The device 100 also comprises at least one interface 130 (hereinafter "interface") for interaction with other devices (not shown).

The points of the elliptic curve are represented over of field K of characteristic $\neq 2$ by the generalized Edwards form

$$E_{/\mathrm{K}} : y^2(1 - df\,x^2) = f^2 - e\,x^2$$

where

- the neutral element is $\boldsymbol{O} = (0, f)$: $\boldsymbol{P} + \boldsymbol{O} = \boldsymbol{O} + \boldsymbol{P} = \boldsymbol{P}$ for every point $\boldsymbol{P}$ in $E$;
- the inverse of $\boldsymbol{P} = (x_1, y_1)$ is $-\boldsymbol{P} = (-x_1, y_1)$;
- the addition of two points $\boldsymbol{P} = (x_1, y_1)$ and $\boldsymbol{Q} = (x_2, y_2)$ in $E$ is given by the point $\boldsymbol{P} + \boldsymbol{Q} = (x_3, y_3)$ satisfying

$$x_3 = (x_1y_2 + x_2y_1)/(f + d\,x_1x_2y_1y_2)$$

and

$$y_3 = (y_1y_2 - e\,x_1x_2)/(f - d\,x_1x_2y_1y_2)$$

and where generalized curve parameters, $d$, $e$ and $f$, are chosen so as to optimize the arithmetic as will be further described hereinafter.

Instead of using the direct coordinates hereinbefore, equivalent coordinates may also be used. A first example of such equivalent coordinates is the use of coordinates obtained by projection. Another example of equivalent coordinates is the addition of dummy variables. Yet another example is to only make use of the $x$-coordinate. As will be further shown hereinafter, the use of equivalent coordinates may also require the use of equivalent formulae for the point addition.

As the field inversions in the generalized Edwards point addition are relatively inefficient from a computation point of view, the elliptic curve is projected on the curve equation of a generalized Edwards curve

$$E_{/\mathrm{K}} : Y^2(Z^2 - df\,X^2) = f^2\,Z^4 - e\,X^2Z^2$$

A point $P = (x_1, y_1)$ on the elliptic curve is then represented by the tuple $(x_1Z_1 : y_1Z_1 : Z_1)$ for any $Z_1 \neq 0$. Conversely, the affine representation of $P$ can be recovered from the projective representation $(X_1 : Y_1 : Z_1)$ by calculating $P = (X_1/Z_1, Y_1/Z_1)$ and the result may then be output. In the projective form, the neutral element is represented by $(0 : f : 1)$, the inverse of $(X_1 : Y_1 : Z_1)$ is $(-X_1 : Y_1 : Z_1)$ and the addition of two points $P = (X_1 : Y_1 : Z_1)$ and $Q = (X_2 : Y_2 : Z_2)$ is given by $R = (X_3 : Y_3 : Z_3)$ with
$X_3 = Z_1Z_2(X_1Y_2 + X_2Y_1)M$, $Y_3 = Z_1Z_2(Y_1Y_2 - e X_1X_2)N$, and $Z_3 = MN$
where $M = f Z_1^2Z_2^2 - d X_1X_2Y_1Y_2$ and $N = f Z_1^2Z_2^2 + d X_1X_2Y_1Y_2$.
By rewriting $X_1 Y_2 + X_2Y_1$ as $(X_1 + Y_1)(X_2 + Y_2) - X_1 Y_1 - X_2Y_2$, this costs

$$10\mathbf{M} + 1\mathbf{S} + 1\mathbf{d} + 1\mathbf{e} + 1\mathbf{f}$$

where $\mathbf{M}$ denotes a field multiplication, $\mathbf{S}$ denotes a field squaring, and $\mathbf{d, e, f}$ denote respectively a multiplication by constants $d$, $e$, $f$.
A generalized Edwards curve is unique up to isomorphism. The preferred embodiment is when curve parameters $(d, e, f)$ are selected so that the total cost of $1\mathbf{d}+1\mathbf{e}+1\mathbf{f}$ is minimal. Typical values for these parameters include $\pm 1$ and $\pm 2$. For such values, the cost of a field multiplication by a constant is comparable to the cost of a few field additions and so can be neglected as evaluating a field addition is orders of magnitude faster than evaluating a field multiplication.
The previous point addition formula is also valid for point doubling (i.e., when $P = Q$). There exists however a faster, dedicated point doubling method.
Plugging $x_2 = x_1$ and $y_2 = y_1$ into the previous affine addition formula yields $x_3 = (2x_1y_1)/(f + d x_1^2y_1^2) = (2f x_1y_1)/(f^2 + df x_1^2y_1^2)$ and $y_3 = (y_1^2 - e x_1^2)/(f - d x_1^2y_1^2) = f(y_1^2 - e x_1^2)/(f^2 - df x_1^2y_1^2)$. Hence, using the curve equation $[y_1^2(1 - df x_1^2) = f^2 - e x_1^2]$, we have:

$$x_3 = (2f x_1y_1)/(y_1^2 + e x_1^2) \text{ and } y_3 = f(y_1^2 - e x_1^2)/(2f^2 - (y_1^2 + e x_1^2)).$$

Working in projective coordinates, however, the doubling of $P = (X_1 : Y_1 : Z_1)$ is given by $R = (X_3 : Y_3 : Z_3)$ with

$$X_3 = 2f X_1Y_1R, \quad Y_3 = f(Y_1^2 - e X_1^2)S, \text{ and } Z_3 = RS$$

where $R = 2(f Z_1)^2 - S$ and $S = Y_1^2 + e X_1^2$. By rewriting $2X_1Y_1$ as $(X_1+Y_1)^2 - X_1^2 - Y_1^2$, this costs $3\mathbf{M} + 4\mathbf{S} + 1\mathbf{e} + 3\mathbf{f}$.
Another useful embodiment is when curve parameters are selected so that the cost of $1\mathbf{e} + 3\mathbf{f}$ is minimal.
It will thus be appreciated that the present solution generalizes the Edwards model to further improve the efficiency so that the addition of two points on an elliptic curve can be as fast as $10\mathbf{M} + 1\mathbf{S}$ where $\mathbf{M}$ denotes a (field) multiplication and $\mathbf{S}$ denotes a (field) squaring, and the doubling of a point can be as fast $3\mathbf{M} + 4\mathbf{S}$.
Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.
Reference numerals appearing in the claims are by way of illustration only and shall have no limiting effect on the scope of the claims.

**Claims**

1. A device (100) adapted to perform calculations on an elliptic curve in generalized Edwards form, $E_{/K} : y^2(1 - df x^2) = f^2 - e x^2$, the device (100) comprising a processor (110) adapted to:

   add two points $(x_1, y_1)$ and $(x_2, x_2)$ by calculating $x_3 = (x_1y_2 + x_2y_1)/(f + d x_1x_2y_1y_2)$ and $y_3 = (y_1y_2 - e x_1x_2)/(f - d x_1x_2y_1y_2)$ in direct or equivalent coordinates.

2. The device according to claim 1 wherein the equivalent coordinates of an affine representation of a point $(x_i, y_i)$ is given by a projective point $(x_iZ_i : y_iZ_i : Z_i)$ for any $Z_i \neq 0$ on a corresponding projective elliptic curve in generalized Edwards form, $E_{/K} : Y^2(Z^2 - df X^2) = f^2 Z^4 - e X^2Z^2$, of the elliptic curve in generalized Edwards form, $E_{/K} : y^2(1 - df x^2) = f^2 - e x^2$, wherein the two projective points $(X_1 : Y_1 : Z_1)$ and $(X_2 : Y_2 : Z_2)$ are added by:

calculating $X_3 = Z_1Z_2(X_1 Y_2 + X_2Y_1)M$, $Y_3 = Z_1Z_2(Y_1Y_2 - e X_1X_2)N$, and $Z_3 = MN$,
where $M = f Z_1^2Z_2^2 - d X_1X_2Y_1Y_2$ and $N = f Z_1^2Z_2^2 + d X_1X_2Y_1Y_2$.

3. The device of claim 2, wherein the processor (100) is further adapted to:

convert the affine representation of points $(x_i, y_i)$ into the projective representation $(x_iZ_i : y_iZ_i : Z_i)$ for any $Z_i \neq 0$; and recover the affine representation of a third point from a projective representation $(X_3 : Y_3 : Z_3)$ by calculating $x_3 = X_3/Z_3$ and $y_3 = Y_3/Z_3$.

4. The device of any of claims 1 to 3, wherein the values of parameters $d$, $e$, and $f$ minimize the total cost of $1\mathbf{d}+1\mathbf{e}+1\mathbf{f}$, where $\mathbf{d}$, $\mathbf{e}$, and $\mathbf{f}$ denote respectively a multiplication by the parameters $d$, $e$, and $f$.

5. The device of claim 4, wherein the values of $d$, $e$, and $f$ are chosen from -2, -1, +1, and +2.

6. A method of performing calculations on an elliptic curve in generalized Edwards form, $E_{/K} : y^2(1 - df x^2) = f^2 - e x^2$, the method comprising the steps, in a device, of:

adding two points $(x_1, y_1)$ and $(x_2, x_2)$ by calculating $x_3 = (x_1y_2 + x_2y_1)/(f + d x_1x_2y_1y_2)$ and $y_3 = (y_1y_2 - e x_1x_2)/(f - d x_1x_2y_1y_2)$ in direct or equivalent coordinates.

7. A method of performing calculations on a projective elliptic curve in generalized Edwards form, $E_{/K} : Y^2(Z^2 - df X^2) = f^2 Z^4 - e X^2Z^2$, of an affine elliptic curve in generalized Edwards form, $E_{/K} : y^2(1 - df x^2) = f^2 - e x^2$, where a point $(x_1, y_1)$ on the affine elliptic curve is then represented by the projective tuple $(x_1Z_1 : y_1Z_1 : Z_1)$ for any $Z_1 \neq 0$, the method comprising the steps, in a device, of:

adding two points $(X_1, Y_1, Z_1)$ and $(X_2, Y_2, Z_2)$ by calculating $X_3 = Z_1Z_2(X_1 Y_2 + X_2Y_1)M$, $Y_3 = Z_1Z_2(Y_1 Y_2 - e X_1X_2)N$, and $Z_3 = MN$,
where $M = f Z_1^2Z_2^2 - d X_1X_2Y_1Y_2$ and $N = f Z_1^2Z_2^2 + d X_1X_2Y_1Y_2$.

8. A computer program product (140) comprising instructions adapted to, when executed on a processor, perform calculations on an elliptic curve in generalized Edwards form, $E_{/K} : y^2(1 - df x^2) = f^2 - e x^2$, by:

adding two points $(x_1, y_1)$ and $(x_2, x_2)$ by calculating $x_3 = (x_1y_2 + x_2y_1)/(f + d x_1x_2y_1y_2)$ and $y_3 = (y_1y_2 - e x_1x_2)/(f - d x_1x_2y_1y_2)$ in direct or equivalent coordinates.

9. A computer program product (140) comprising instructions adapted to, when executed on a processor, perform calculations on a projective elliptic curve in generalized Edwards form, $E_{/K} : Y^2(Z^2 - df X^2) = f^2 Z^4 - e X^2Z^2$, of an affine elliptic curve in generalized Edwards form, $E_{/K} : y^2(1 - df x^2) = f^2 - e x^2$, where a point $(x_1, y_1)$ on the affine elliptic curve is then represented by the projective tuple $(x_1Z_1 : y_1Z_1 : Z_1)$ for any $Z_1 \neq 0$, by:

adding two points $(X_1, Y_1, Z_1)$ and $(X_2, Y_2, Z_2)$ by calculating $X_3 = Z_1Z_2(X_1 Y_2 + X_2Y_1)M$, $Y_3 = Z_1Z_2(Y_1 Y_2 - e X_1X_2)N$, and $Z_3 = MN$,
where $M = f Z_1^2Z_2^2 - d X_1X_2Y_1Y_2$ and $N = f Z_1^2Z_2^2 + d X_1X_2 Y_1 Y_2$.

| Device | 100 |
| --- | --- |
| Memory 120 | |
| Processor 110 | |
| Interface 130 | |

140

Figure 1

Europäisches
Patentamt

European
Patent Office

Office européen
des brevets

# EUROPEAN SEARCH REPORT

Application Number

EP 08 30 5148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | DANIEL J BERNSTEIN ET AL: "Faster Addition and Doubling on Elliptic Curves" ADVANCES IN CRYPTOLOGY, ASIACRYPT 2007; [LECTURE NOTES IN COMPUTER SCIENCE], SPRINGER BERLIN HEIDELBERG, BERLIN, HEIDELBERG, vol. 4833, 2 December 2007 (2007-12-02), pages 29-50, XP019083764 ISBN: 978-3-540-76899-9 * abstract * * page 30, line 1 - page 33, last line * * page 37, line 1 - page 41, last line * ----- | 1-9 | INV. G06F7/72 |
| D,A | H.M. EDWARDS: "A Normal Form for Elliptic Curves" BULLETIN OF THE AMERICAN MATHEMATICAL SOCIETY, vol. 44, no. 3, July 2007 (2007-07), pages 393-422, XP002521580 * the whole document * ----- | 1-9 | |

TECHNICAL FIELDS
SEARCHED (IPC)

G06F

The present search report has been drawn up for all claims

| Place of search | Date of completion of the search | Examiner |
|---|---|---|
| The Hague | 30 March 2009 | Post, Katharina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Harold M. Edwards.** A normal form for elliptic curves. *Bulletin of the American Mathematical Society,* 2007, vol. 44 (3), 393-422

- Faster addition and doubling on elliptic curves. Advances in Cryptology - ASIACRYPT 2007, volume 4833 of Lecture Notes in Computer Science. Springer, 2007, vol. 4833, 29-50